# EUROPÄISCHE PATENTSCHRIFT

(11) **EP 1 107 880 B1**
(45) Veröffentlichungstag und Bekanntmachung des Hinweises auf die Patenterteilung: **14.01.2004**
(21) Anmeldenummer: 99938331.8
(22) Anmeldetag: 24.07.1999
(51) Int. Cl.: B60P 3/22, B60P 1/60

(54) **SAUG-DRUCK-ANLAGE FÜR KIPPSILOSATTELANHÄNGER**
SUCTION-PRESSURE FACILITY FOR SILO TILT SEMI-TRAILER
DISPOSITIF DE PRESSION-ASPIRATION POUR REMORQUE-SILO BASCULANTE

(30) Priorität: 26.08.1998 DE 29815293 U
(43) Veröffentlichungstag der Anmeldung: 20.06.2001
(73) Patentinhaber: Feldbinder & Beckmann Fahrzeugbau GmbH & Co. KG, 21423 Winsen (DE)
(72) Erfinder: BECKMANN, Jan-Dirk, D-21423 Winsen an der Luhe (DE); FELDBINDER, Otto, D-29643 Neuenkirchen (DE)
(74) Vertreter: Richter, Werdermann, Gerbaulet & Hofmann
(86) Internationale Anmeldenummer: PCT/EP1999/005301
(87) Internationale Veröffentlichungsnummer: WO 2000/012353

(56) Entgegenhaltungen:
- DE-A- 3 106 765
- US-A- 3 832 005
- US-A- 4 200 535
- US-A- 4 218 226
- US-A- 4 227 893
- US-A- 4 424 069

## Beschreibung

### Technisches Gebiet

Die Erfindung betrifft eine Saug-Druck-Anlage für einen Silobehälter, mit einem Kompressor und Leitungen. Eine solche Saug-Druck-Anlage dient zur Befüllung von Silofahrzeugen aller Art, wozu in dem Silo-Behälter des Fahrzeugs ein Vakuum durch einen Kompressor, der entweder blasen oder saugen kann, erzeugt wird, wobei zum Schutz des Kompressors diesem eine Filteranlage vorgeschaltet ist.

Aus der US-PS 4,227,893 ist eine Saug-druck-Anlage für einen Silo-Behälter mit einem Kompressor und mehreren Leitungen bekannt, bei der zwischen dem Kompressor und dem Silo-Behälter eine Filtereinheit bestehend aus einem Filterkörper und einem Filtersumpf, angeordnet ist, und die Filtereinheit über eine Evakuierungsleitung mit dem Silo-Behälter und über die Kompressorleitung mit dem Kompressor verbindbar ist.

Bei Spezialfahrzeugen wie Silofahrzeugen, die in der Regel auch zum Transport von staubförmigen, pulverförmigen oder feingranulatischen Stoffen dienen, wird die Beladung mit derartigen Gütem mittels Saug-Druck-Anlagen durchgeführt, wobei der Silo-Behälter zuerst evakuiert, das heißt luftleer gepumpt wird, so daß ein Unterdruck erzeugt wird, durch den dann das Ladegut in den Behälter hineingesaugt wird. Als problematisch hierbei erweist sich die Tatsache, daß staubförmiges Materiaf in den Kompressor, der zum Erzeugen des Unterdrucks bzw. zum Blasen dient, gelangen kann, was zur Folge hat, daß der Kompressor zerstört werden kann. Um das zu verhindern, ist in der Zuleitung zum Kompressor eine Filtereinheit angeordnet, mit der das staubförmige Material, das durch den Unterdruck mitgerissen wird, herausgefiltert werden kann. Die herkömmlichen Systeme arbeiten mit Filtereinheiten, die entweder nicht fein genug sind oder die nicht leistungsstark sind, was zur Folge hat, daß nicht alles staubförmige Material herausgefiltert wird, so daß ein Rest noch immer in den Kompressor gelangen kann. Nachteilig hierbei ist auch die Tatsache, daß nicht nur der Kompressor durch die Staubpartikel verschmutzt und beschädigt werden kann, sondern daß auch die Druckleitung verstopft, so däß die Wirkung der Saug-Druck-Anlage insgesamt nachläßt. Eine aufwendige und kostspielige Reinigung der Leitungen ist dann notwendig, die zudem in regelmäßigen Abständen wiederholt werden muß.

### Stand der Technik

Eine bekannte Saugluft-Förderanlage (DE-Hütte II B, des Ingenieurs Taschenbuch, 28. Auflage, S. 550) besteht aus einem Saugrüssel mit einer Rohrleitung, die in. einen. Saugbehälter mündet, wobei in Strömungsrichtung hinter dem Saugbehälter ein Filter und hinter dem Filter eine Pumpe angeordnet ist. Von der Pumpe aus wird die Abluft in die Atmosphäre gepumpt. Bei einer derartigen Saugluft-Förderanlage ist es möglich, von mehreren Stellen gleichzeitig nach einem Sammelpunkt das Fördergut zu transportieren. Das Gut wird infolge des durch die Pumpe erzeugten Unterdrucks von 0,4 bis 0,7 atm durch den Saugrüssel aufgenommen, durch die Saug- oder Rohrleitung dem Sammelbehälter zugeführt, in dem Sammelbehälter aufgrund der Geschwindigkeitsminderung der Förderluft ausgeschieden wird oder durch ein Zellenrad oder eine Pendelschleuse ausgeschleust. Die aus dem Sammelbehälter austretende staubbeladene Luft wird in dem nachgeschalteten Zyklon gereinigt und strömt anschließend durch die Pumpe. Die Reinigung der Abluft in einem Zyklon hat einen hohen Druckverlust zur Folge, so daß mit derartigen Saugluft-Förderanlagen nur geringe Höhenunterschiede überwunden werden können. Hinzu kommt, daß die aus dem Zyklon austretende Abluft immer noch staubhaltig ist, was zu einem hohen Verschleiß in der Unterdruckerzeugungsanlage führt. Diese Anlage arbeitet demzufolge nicht staubfrei. Außerdem handelt es sich hierbei um eine Anlage, die als Förderanlage ausgebildet ist, so daß mit dieser keine Reinigung des Silo-Behälters möglich ist.

Bei ähnlichen Saug-Druck-Anlagen wurde daher bei der Klappe, mit der der Einlaß in den Silo-Behälter absperrbar ist, ein Filter angeordnet, das dazu dient, Staubpartikel festzuhalten, damit diese nicht in die Leitungen und damit in den Kompressor gelangen können. Nachteilig hierbei ist, daß der Filter nur eine geringe Wirkung besitzt, so daß ein Großteil der Staubkömer hindurch in das Leitungssystem gelangt. Der Filter verstopft sehr schnell und muß daher oftmals gereinigt werden, was mit einem erheblichen Zeitaufwand verbunden ist.

Eine weitere derartige Anlage ist aus der DE-OS 3 106 765 bekannt, bei der in dem Silo-Behälter des Silofahrzeugs ein Filter angeordnet ist, an dem eine nach außen führende Vakuumleitung angeschlossen ist, die zu einem Kompressor als Vakuumerzeuger führt. So ist es möglich, daß in dem Silo-Behälter ein Vakuum entsteht, wodurch staubförmige Güter oder ähnliches in den Behälter eingesaugt werden können, so daß eine sich mit der Trägertuft ausbildende Staubwolke den Behälter nicht verlassen kann, so daß nur die Förderluft über den Filter aus dem Behälter gesaugt wird, während der gesamte Staubanteil im Behälter bleibt und sich dort-niederschlägt. Nachteilig ist hierbei, daß auch bei diesem Filter nicht der gesamte Staubanteil zurückgehalten wird, so daß der nicht zurückgehaltene Anteil in den Kompressor gelangen kann. Hinzu kommt auch noch, daß auch bei dieser Anlage der Filter schnell verstopfen kann und dann gereinigt werden muß, was sehr zeitaufwendig und kostspielig ist, was zur Folge hat, daß der Behälter stillgelegt werden muß, um an den Filter zu gelangen, was zudem auch noch sehr umständlich ist. Hinzu kommt noch, daß durch diese Anordnung ein großer Teil des Laderaums des Behälters verlorengeht, so daß weniger transportiert werden kann.

### Darstellung der Erfindung, Aufgabe, Lösung, Vorteile

Es ist daher Aufgabe der Erfindung, eine Saug-Druck-Anlage der eingangs genannten Art so zu verbessern, bei dem kein Staubanteil in den Kompressor gelangt und die eine Filtereinheit aufweist, die gereinigt werden kann und bei der die Evakuierungsleitung gleichzeitig auch als Reinigungsleitung benutzt werden kann, so daß die Reinigung des Filters schnell und kostengünstig erfolgen kann.

Diese Aufgabe wird durch die Saug-Druck-Anlage mit den Merkmalen des Anspruchs 1 gelöst.

Bei einer solchen Saug-Druck-Anlage ist vorgesehen, daß in der Evakuierungsleitung zwischen dem Silo-Behälter und dem Kompressor eine Fütereinheit angeordnet ist, die aus einem Zyklonenfilter besteht. Es handelt sich dabei um einen Filter, bei dem die Staubabscheidung durch Fliehkräfte erfolgt, die durch die Rotation des mit hoher Geschwindigkeit in den Zyklonfilter eintretenden Gas-Feststoff-Gemischs entstehen, so daß eine Trennung nach der Dichte erfolgt. Die schweren Feststoffteilchen, hier die Staubpartikel, bewegen sich aufgrund der Schwerkraft spiralförmig längs der Zyklonfilterwandung und werden nach unten ausgetragen, so daß sich diese in einem Zyklonsumpf. sammeln und ablagem können, wobei die leichteren Teilchen sich im Innern spiralförmig mit dem Gasstrom nach oben bewegen und so wieder in den Luft- bzw. Evakuierungsstrom gelangen. Die Reinigung des Zyklonfiltersumpfes wird durch die Öffnung eines Kugelhahns eingeleitet, der am Ende einer L-förmigen Leitung angeordnet ist, die mit dem Zyklonsumpf verbunden ist, so daß bei Unterdruck Umgebungsluft eingesaugt werden kann, die durch den - Zyklönsumpf bläst und so dort angesammelte Verunreinigungen bzw. die Staubpartikel zurück in den Silobehälter bläst. Hierzu ist der Zyklonsumpf mittels einer Leitung mit der Evakuierungsleitung, die zu dem Silo-Behälter führt, verbunden. Sowohl in der Evakuierungsleitung ist zwischen der Filtereinheit und der Einmündung der Leitung vom Zyklonsumpf ein in der Evakuierungsleitung angeordnetes erstes Rückschlagventil angeordnet, als auch die Leitung vom Zyklonsumpf ein zweites Rückschlagventil angeordnet ist. Wird nun der Zyklonensumpf durch Einblasen von Luft gereinigt, so ist das erste Rückschlagventil geschlossen um zu verhindern, daß Staubpartikel in den Kompressor gelangen können, wobei das zweite Rückschlagventil geöffnet ist, damit der Reinigungsvorgang durchgeführt werden kann.

Soll nun der Behälter zum Befüllen evakuiert werden, so wird das erste Rückschlagventil, das in der Evakuierungsleitung angeordnet ist, geöffnet und das zweite Rückschlagventil, das in der Ableitung vom Zyklonensumpf angeordnet ist, geschlossen, um zu verhindern, daß Staubpartikel in den Zyklonensumpf gelangen, die diesen unnötig auffüllen und von dort aus weiter in den Kompressor gelangen können.

Die Befüllung des Behälters kann entweder über die dafür vorgesehenen Dornöffnungen oder mit Material mit einer Sauglanze von unten erfolgen, indem das Material von unten in den Behälter eingesaugt wird.

Nach einer weiteren Ausführungsform ist vorgesehen, daß die Ventile des Saug-Druck-Systems, die manuell bedient werden müssen, mit einem elektrischen Impulsgeber, der einen Schalter zum Öffnen und Schließen der Ventile bedient, versehen werden, so daß diese mit einem Computer, der als Steuereinheit fungiert, in Verbindung stehen, wodurch die Möglichkeit besteht, daß diese vom Führerhaus aus durch den Fahrer des Silofahrzeuges per Knopfdruck bedient werden können, so daß der Fahrer seinen Platz im Führerhaus nicht verlassen muß, was sehr viel Zeit spart, so daß das Fahrzeug sehr schnell wieder einsatzbereit ist.

Bei einer weiteren Ausführungsform der Saug-Druck-Anlage ist vorgesehen, daß auch die Entleerung des Behälters mittels der Auslaufschüssel, die am hinteren unteren Ende des Silofahrzeuges angeordnet ist, über dieselbe Anlage gesteuert werden kann. Hierzu ist am Kompressor eine weitere Leitung angeordnet, die in eine Luftbatterie mündet und durch die Druckluft geleitet wird. Die Luftbatterie besteht aus einem zylinderförmigen Hohlkörper, dessen Enden verschlossen sind. An der Unterseite des zylinderförmigen Hohlkörpers befinden sich fünf Anschlüsse, wobei der größte für den Anschluß der Leitung vom Kompressor dient; die anderen vier Anschlüsse, die kleiner ausgebildet sind, dienen zum Anschluß von Leitungen, die an verschiedenen Stellen in die Auslaufschüssel einmünden. In diesen Leitungen sind in dem Bereich des Anschlusses an die Luftbatterie Ventile angeordnet, mit denen die Leitungen jeweils separat geöffnet oder verschlossen werden können. Somit ist es möglich, über die gesamte Auslaufschüssel verteilt, Druckluft in diese einzublasen, damit das Schüttgut gleichmäßig aufgelockert und die im Schüttgut entstandenen Brücken aufgebrochen werden, so daß das Schüttgut ablaufen kann. Zudem besteht die Möglichkeit, durch Schließen von Ventilen die Auflockerung zu verstärken, so daß auch sehr stark zusammengedrückte Bereiche des Schüttgutes gelockert werden können, die beim ersten. Durchlauf noch nicht gelockert worden sind, da hierbei der Druck auf diese Bereiche konzentriert wird. Wahlweise können ein, zwei oder auch drei Ventile geschlossen sein, während die anderen geöffnet sind.

An der Oberseite der Luftbatterie sind bis zu zwei Manometer angeordnet, um die Druckverhältnisse in den einzelnen Leitungen überwachen zu können.

Die Auslaufschüssel selbst weist einen kugelförmig, nach unten sich auf einen engeren Querschnitt eines Anschlußstutzens für eine Fördeneitung verengenden Auslauf auf, wobei die Auslaufschüssel reversibel mit dem Silo-Behälter verbunden ist und wobei in der Auslaufschüssel ein Schüssel einsatz angeordnet ist, der einen oberen auskragenden Rand aufweist, der im Bereich der Kontaktfläche zwischen Behälter und Auslaufschüssel gehalten wird. Der Schüsseleinsatz weist dabei an beiden Seiten kreisförmige Öffnungen auf und dient dazu, die Entleerung zu verstärken, indem dieser durch die eingeleitete Druckluft in Schwingungen versetzt wird, wodurch eine weitere Auflockerung erfolgt.

Bei einer weiteren Ausführungsform der Saug-Druck-Anlage ist anstelle des Zyktonenfilters eine anders gebaute Filteranlage angeordnet. Als solche kommen Bandfilter in Betracht, die aus einem endlosen umlaufenden Filtertuch bestehen, in dem sich die Staubpartikel absetzen und welches dann mittels Durchblasen von Druckluft gereinigt werden kann.

Daneben können auch sogenannte Trommel-Filter als Filtereinheit verwendet werden. Hierbei taucht eine rotierende Siebtrommel in das Siebgut ein und nimmt die festen Bestandteile, wie z.B. Staubpartikel auf. Die Siebtrommel weist eine Anschluß- und eine Abflußleitung auf, so daß die Siebtrommel nach dem Filtervorgang mittels Druckluft gereinigt werden kann. Anstelle von Sieboder Filtertrommeln können mehrere Sieb- oder Filterscheiben angeordnet sein, so daß diese einen Scheibenfilter bilden.

Alternativ kann auch ein Schlauch-Filter als Filtereinheit verwendet werden, in dessen schlauchförmig angeordneten Filtertüchem sich Schwebestoffe und Staubpartikel ablagern können und die mittels Druckluft gereinigt werden können.

Es können als Filtereinheit auch Ultrafilter verwendet werden, die auf der Basis der Ultrafiltration arbeiten. Als Ultrafiltration wird ein Verfahren definiert, das zur Trennung von Stoffgemischen mit Hilfe semipermeabler Membranen dient.

Bei einer weiteren Ausführungsform der Saug-Druck-Anlage ist vorgesehen, daß zwischen Kompressor und Filteranlage eine weitere kleinere Filteranlage als Nachfilter eingeschaltet ist, die auch als Zyklonfilter ausgebildet ist und die die Aufgabe hat, noch verbleibende Reststaubpartikel herauszufiltem. Diese Anordnung erweist sich in den Fällen, in denen ein anderer Filtertyp als erste Filtereinheit verwendet wird, als günstiger, da hierbei nicht alle Staubpartikel in der ersten Phase herausgefiltert werden können.

Weitere vorteilhafte Ausgestaltungen sind in den Unteransprüchen gekennzeichnet.

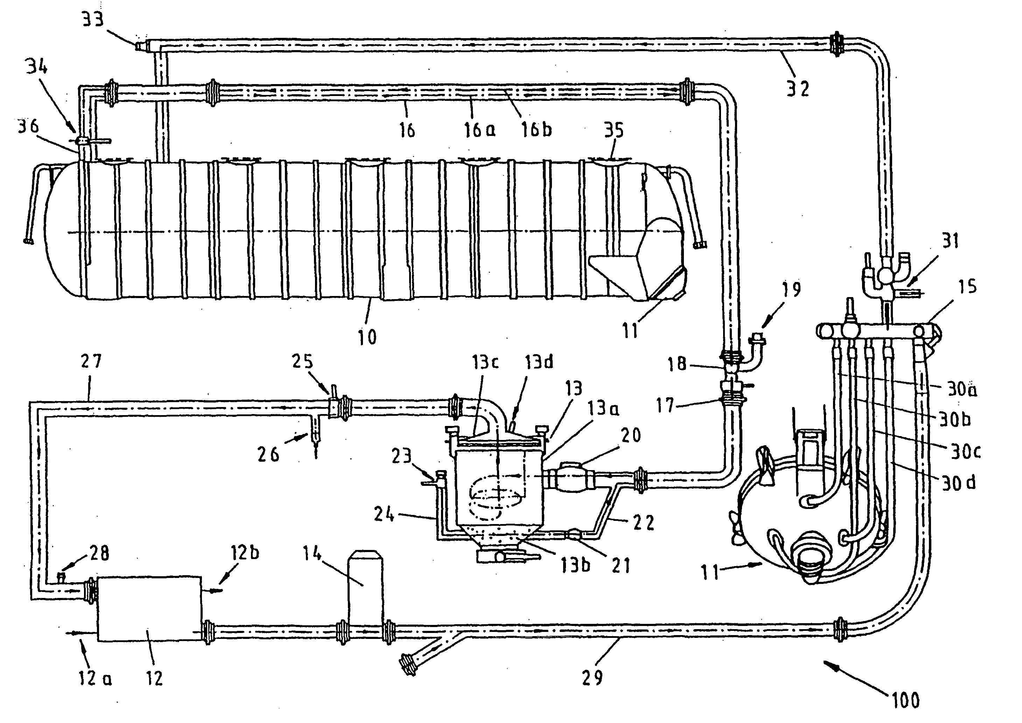

### Kurze Beschreibung der Zeichnung

Im folgenden wird die Erfindung an Hand eines in der Zeichnung dargestellten Ausführungsbeispiels näher erläutert.

In der Zeichnung ist eine Saug-Druck-Anlage 100 dargestellt, wobei von dem Silofahrzeug aus Gründen der besseren Übersichtlichkeit lediglich der Behälter 10 dargestellt ist.

### Bester Weg zur Ausführung der Erfindung

Die Saug-Druck-Anlage 100 wird beispielsweise sowohl für stationäre Silo-Behälter als auch für solche Behälter, die Aufbauteil eines Fahrzeugs sind, benutzt, In der Zeichnung ist schematisch ein Silo-Behälter 10 dargestellt, der als Aufbauteil für Fahrzeuge verwendet wird und der an seinem hinteren unteren Ende eine Auslaufschüssel 11 zur Entleerung des Silo-Behälters 10 aufweist. Auf der Oberseite des Silo-Behälters 10 sind mehrere Domklappen 35, jeweils im gleichen Abstand zueinander, angeordnet. Im vorderen Bereich ist an der Oberseite des Silo-Behälters 10 ein Anschlußstutzen 36 angeordnet, der mittels der Klappe 34 verschließbar ist und an den die Leitung 16, die entweder als Rohr oder als Schlauch ausgebildet sein kann, angeschlossen werden kann. Die Leitung 16 mündet in eine Filtereinheit 13, die außerhalb des Silo-Behälters angeordnet ist. In der Leitung 16 ist eine zweite Klappe 17 angeordnet, mit der die Leitung 16 verschiebbar ist. Vor der zweiten Klappe 17 ist eine Vakuumventil 19 mit einem Manometer 18 angeordnet, welches zur Regelung dient. Die Filtereinheit 13 ist mittels der Leitung 27, der Kompressorleitung, mit einem Kompressor 12 verbunden, der eine Einsaugöffnung 12a, die beim Erzeugen von Druckluft geöffnet wird, um Umgebungsluft ansaugen zu können, und der eine Abflußöffnung 12 b aufweist, durch die die abgesaugte Luft an die Umgebung abgegeben wird, wenn der Silo-Behälter 10 durch die Leitungen 16, 27 evakuiert wird, wobei die Leitung 16 dann als Evakuierungsleitung 16a dient. In der Kompressorteitung 27 ist zwischen der Filtereinheit 13 und dem Kompressor 12 die erste Klappe 25 angeordnet, mit der die Kompressoneitung 27 geöffnet oder verschlossen werden kann. Dahinter ist in Richtung des Kompressors 12 ein Auslaufhahn 26 angeordnet, der zur Regelung des Drucks in der Kompressorleitung 27 dient. Zusätzlich ist aus Sicherheitsgründen in der Kompressorleitung 27 vor dem Kompressor 12 ein Vakuumventil 28 angeordnet.

Die Filtereinheit 13, die in der Zeichnung als Zyklonfilter dargestellt ist, besteht aus einem Filterkörper 13a, der einen Deckel 13c aufweist, der einen Anschlußstutzen zum Anschluß der Kompressorleitung 27 aufweist und der daneben eine Öffnung 13d aufweist, durch die Preßluft eingeleitet werden kann und die mittels einer Ventilsteuerung die Filterfläche von Staubteilchen säubert. Dies kann auch während der Evakuierung des Behälters durchgeführt werden. Der Deckel 13c ist mittels zweier seitlich angeordneter Schraubzwingen fest mit dem Filterkörper 13a verbunden. Am unteren Ende des Filterkörpers 13a ist der Zyklon- oder Filtersumpf 13b angeordnet, in dem sich die ausgeschiedenen Staubpartikel sammeln. An dem Filtersumpf 13b ist eine L-förmige Zuleitung angeordnet, an deren äußerem, nach oben gerichtetem Ende ein Kugelhahn 23 angeordnet ist, mit dem die Leitung an diesem Ende geöffnet oder geschlossen werden kann. Des Weiteren ist der Filtersumpf 13b mit der Leitung 22, in der ein zweites Rückschlagventil 21 angeordnet ist, mit der Leitung 16 verbunden.

Soll nun der Silo-Behälter 10 beladen werden, so wird der Kompressor 12 in Betrieb genommen, wobei die Abflußöffnung 12b geöffnet wird, so daß dieser als Pumpe arbeitet und die Luft aus dem Silo-Behälter 10 mittels der Leitung 16, die nun als Evakuierungsleitung 16a fungiert und der Kompressorleitung 27 abgesaugt wird, so daß in diesem ein Vakuum erzeugt wird, so daß das Ladegut in den Silo-Behälter 10 eingesaugt werden kann. Das erste Rückschlagventil 20, das in der Leitung 16 angeordnet ist, ist in diesem Zustand geöffnet; während das Rückschlagventil 21, das in der Verbindungsleitung 22 zum Filter- bzw. Zyklonensumpf 13b angeordnet ist, geschlossen ist, so daß keine Staubpartikel des Ladeguts direkt in den Filter bzw. Zyklonensumpf 13b gelangen können, sondern daß diese direkt in den Filterkörper 13a der Filtereinheit 13, die als Zyklonenfilter ausgebildet ist, gelangen. In dem Filterkörper 13a rotiert die Luft, so daß die schweren Teile, hier die Staubpartikel, bedingt durch die Schwerkraft und Gravitation, herausfliegen und sich in dem Zyklonoder Filtersumpf 13b ansammeln, so daß diese aus dem Luftstrom gefiltert werden und nicht mehr in den Kompressor 12 gelangen können.

Zur Reinigung des Filter- oder Zyklonensumpfes 13b wird das erste Rückschlagventil 20, das in der Leitung 16 angeordnet ist, geschlossen, so daß kein Luftstrom den Filterkörper 13a erreichen kann, während das zweite Rückschlagventil 21, das in der Zuleitung 22 zum Filter- oder Zyklonensumpf 13b angeordnet ist, geöffnet ist. Zum Reinigen wird der Kugelhahn 23, der am äußeren Ende der L-förmigen Leitung 24 angeordnet ist, geöffnet, wodurch aufgrund des erzeugten Vakuums in dem Silo-Behälter 10 und der Leitung 16 Umgebungsluft einströmen kann, die durch den Sumpf 13b bläst und die dort gesammelten Staubpartikel in den Silo-Behälter 10 durch die Leitung 16 zurückbläst, die nun als Reinigungsleitung 16b arbeitet. Während dieses Vorgangs ist die erste Klappe 25 geschlossen und die zweite Klappe 17 geöffnet. Zur Reinigung des Filterkörpers 13a wird also die Leitung 27 zum Kompressor 12 geschlossen und der Filterkörper 13a beziehungsweise der Filtersumpf 13b wird im Gegenstrom gereinigt.

An den Kompressor 12 kann neben der Leitung 27 noch die Drucklufteitung 29 angeschlossen werden, in der ein Mikrofilter 14 angeordnet ist und die in eine Luftbatterie 15 mündet, an der die Zuleitungen 30a, 30b, 30c, 30d angeschlossen sind, die durch Ventile jeweils absperrbar sind und die in verschiedenen Positionen in die Auslaufschüssel 11 münden. Hierdurch ist es möglich, mit dem Kompressor 12 Druckluft zu erzeugen, wobei die Einsaugöffnung 12a geöffnet und die Ablaßöffnung 12b geschlossen ist, wobei die Druckluft durch die Druckluftleitung 29 in die Luftbatterie 15 gelangt, in der diese in die Zuleitungen 30a, 30b, 30c, 30d geleitet wird, so daß das Ladegut durch Einblasen in die Auslaufschüssel 11 gelockert werden kann. An der Luftbatterie 15 ist die Oberluftleitung 32 angeschlossen, in der eine Ventileinheit 31 angeordnet ist und die in den Silo-Behälter 10 mündet. Die Oberluftleitung 32 dient zur Abführung von überschüssiger Druckluft aus der Luftbatterie 15 und kann zum Aufheben des Vakuums und zur Erzeugung des Entladedrucks in dem Silo-Behälter 10 benutzt werden, indem die geschlossene Ventileinheit 31 geöffnet wird.

### Bezugszeichenliste

- 100: Saug-Druck-Anlage
- 10: Silo-Behälter
- 11: Auslaufschüssel
- 12: Kompressor
- 12a: Einzugsöffnung
- 12b: Abflußöffnung
- 13: Filtereinheit / Zyklonfilter
- 13a: Filterkörper
- 13b: Zyklon- / Filtersumpf
- 13c: Deckel
- 13d: Öffnung
- 14: Mikrofilter
- 15: Luftbatterie
- 16, 16a: Evakuierungsleitung
- 16b: Reinigungsleitung
- 17: Schließeinrichtung, Klappe
- 18: Manometer
- 19: Vakuumventil
- 20: erstes Rückschlagventil
- 21: zweites Rückschlagventil
- 22: Rückführungsleitung
- 23: Kugelhahn
- 24: Belüftungsleitung
- 25: Schließeinrichtung, Klappe
- 26: Auslaufhahn
- 27: Kompressorleitung
- 28: Vakuumventil
- 29: Druckluftleitung
- 30a: Zuleitung
- 30b: Zuleitung
- 30c: Zuleitung
- 30d: Zuleitung
- 31: Ventileinheit
- 32: Oberluftleitung
- 33: Vakuumventil
- 34: Klappe
- 35: Domdeckel
- 36: Anschlußstutzen

## Patentansprüche

1. Saug-Druck-Anlage (100) für einen Silo-Behälter (10), mit einem Kompressor (12) und Leitungen (16; 27), wobei zwischen dem Kompressor (12) und dem Silo-Behälter (10) eine Fiitereinheit (13), bestehend aus einem Filterkörper (13a) und einem Filtersumpf (13b), angeordnet ist, und die Filtereinheit- (13) über eine Evakuierungsleitung (16) mit dem Silo-Behälter (10) und über die Kompressorleitung (27) mit dem Kompressor (12) verbindbar ist,
**dadurch gekennzeichnet,**
**daß** in der Evakuierungsleitung (16) ein erstes Ventil (20) angeordnet ist, daß in einer Rückführungsleitung (22), die den Filtersumpf (13b) mit der Evakuierungsleitung (16) verbindet, ein zweites Ventil (21) angeordnet ist, daß eine erste Schließeincichtung (25) in der Kompressorleitung (27) und eine zweite Schließeinrichtung (17) in der Evakuierungsleitung (16) zum Silo-Behälter (10) angeordnet sind und daß ein Belüftungsventil (23) am Ende einer Belüftungsleitung (24) angeordnet ist, so daß der filtersumpf (13b) bei Öffnung des Ventils (23) reinigbar ist, wobei Verunreinigungen oder dgl. durch die Rückführungsleitung (22) und die Evakuierungsleitung (16) in den Silo-Behälter (10) einblasbar sind.

2. Saug-Druck-Anlage (100) nach Anspruch 1,
**dadurch gekennzeichnet,**
**daß** die Filtereinheit (13) als Zyklonfilter und der Filtersumpf (13b) als Zyklonsumpf ausgebildet ist.

3. Saug-Druck-Anlage nach einem der Ansprüche 1 oder 2,
**dadurch gekennzeichnet,**
**daß** das erste Ventil (20) und/oder das zweite Ventil (21) ein Rückschlagventil ist.

4. Saug-Druck-Anlage nach Anspruch 1 oder 3,
**dadurch gekennzeichnet**,
die erste Schließeinrichtung (25) und/oder die zweite Schließeinrichtung (17) als Schwenk- oder Schließklappe in der zugeordneten Leitung ausgebildet ist.

5. Saug-Druck-Anlage nach einem der Ansprüche 1 bis 4,
**dadurch gekennzeichnet,**
**daß** das Belüftungsventil (23) als Kugelhahn ausgebildet ist.

6. Saug-Druck-Anlage nach einem der Ansprüche 1 bis 5,
**dadurch gekennzeichnet,**
**daß** die Ventile (21; 22), die Schließeinrichtungen (17; 25) und/oder das Belüftungsventil (23) mit elektrischen, pneumatischen oder hydraulischen Batätigungseinrichtungen versehen sind, so daß diese femgesteuert, insbesondere computergesteuert, regelbar und bedienbar sind.

7. Saug-Druck-Anlage nach einem der Ansprüche 1 bis 6,
**dadurch gekennzeichnet,**
**daß** an dem Kompressor (12) eine Druckluftleitung (29) angeschlossen ist und die Druckluftleitung (29) an eine Luftbatterie (15) angeschlossen ist, wobei mittels der Leitungen (30a; 30b; 30c; 30d), die in eine Auslaufschüssel (11), die am rückwärtigen Ende oder an der Unterseite des Silo-Behälters (10) angeordnet ist, einmünden, in der Auslaufschüssel (11) befindliches Ladegut durch Einblasen von Druckluft auflockerbar ist.

8. Saug-Druck-Anlage nach einem der Ansprüche 1 bis 7,
**dadurch gekennzeichnet,**
**daß** der Filtersumpf (13b) die L-förmige Belüftungsleitung (24) aufweist, an deren Ende der Kugelhahn (23) angeordnet ist und daß der Filtersumpf (13b) über die Rückführungsleitung (22), die das Rückschlagventil (21) aufweist, mit der Evakuierungsleitung (16), die an den Silo-Behälter (10) angeschlossen ist, verbunden ist.

9. Saug-Druck-Anlage nach einem der Ansprüche 1 bis 8,
**dadurch gekennzeichnet,**
**daß** die Reinigung des Filterkörpers (13a) der Filtereinheit (13) im Gegenstrom durchführbar ist, wobei die Kompressorleitung (27) mit der Klappe (25) verschließbar ist.

## Claims

1. Suction pressure installation (100) for a silo container (10) with a compressor (12) and pipes (16 ; 27), whereby a filter unit (13) consisting of a filter body (13a) and a filter sump (13b) is placed between the compressor (12) and the silo container (10), and the filter unit (13) can be connected over an evacuation pipe (16) with the silo container (10) and over the compressor pipe (27) with the compressor (12),
**characterized in**
**that** a first valve (20) is placed in the evcuation pipe (16), that a second valve (21) is placed in a return pipe (22) which connects the filter sump (13b) with the evacuation pipe (16), that a first closing device (25) is placed in the compressor pipe (27) and a second closing device (17) is placed in the evacuation pipe (16) to the silo container (10) and that a ventilation valve 823) is placed at the end of a ventilation pipe (24) so that the filter sump (13b) can be cleaned by opening the valve 823), whereby impurities or the like can be blown through the return pipe (22) and the evacuation pipe (16) into the silo container (10).

2. Suction pressure installation (100) according to claim 1,
**characterized in**
**that** the filter unit (13) is configured as a cyclone filter and the filter sump (13b) is configured as a cyclone sump.

3. Suction pressure installation according to any of the claims 1 or 2,
**characterized in**
**that** the first valve (20) and/or the second valve (21) is a return valve.

4. Suction pressure installation according to claim 1 or 3,
**characterized in**
**that** the first closing device (25) and/or the second closing device (17) is configured as pivoting or closing flap in the associated pipe.

5. Suction pressure installation according to any of the claims 1 to 4,
**characterized in**
**that** the ventilation valve (23) is configured as a ball valve.

6. Suction pressure installation according to any of the claims 1 to 5,
**characterized in**
**that** the valves (21 ; 22), the closing devices (17 ; 25) and/or the ventilation valve (23) are provided with electric, pneumatic or hydraulic actuating devices so that they are controllable and operable remote controlled, in particular computer controlled.

7. Suction pressure installation according to any of the claims 1 to 6,
**characterized in**
**that** a compressed air pipe (29) is connected with the compressor 812) and the compressed air pipe (29) is connected with an air battery (15), whereby the goods to be loaded which are in the discharge bowl (11) can be loosened by blowing-in of compressed air by means of the pipes (30a; 30b; 30c; 30d) which run into a discharge bowl (11) which is placed at the rear end or on the lower side of the silo container (10).

8. Suction pressure installation according to any of the claims 1 to 7,
**characterized in**
**that** the filter sump (13b) has the L-shaped ventilation device (24) at the end of which the ball valve (23) is placed and that the filter sump (13b) is connected over the return pipe (22), which has the return valve (21 ), with the evacuation pipe (16) which is connected with the silo container (10).

9. Suction pressure installation according to any of the claims 1 to 8,
**characterized in**
**that** the cleaning of the filter body (13a) of the filter unit (13) can be carried out in the reverse flow, whereby the compressor pipe (27) can be closed with the flap (25).

## Revendications

1. Installation d'aspiration et de refoulement (100) pour un réservoir silo (10), avec un compresseur (12) et des conduites (16 ; 27), une unité filtrante (13) constituée par un corps de filtre (13a) et un puisard de filtre (13b) étant placée entre le compresseur (12) et le réservoir silo (10) et l'unité filtrante (13) pouvant être reliée au réservoir silo (10) par une conduite de production de vide (16) et au compresseur (12) par une conduite de compresseur (27),
**caractérisée en ce**
**qu'**un premier clapet (20) est placé dans la conduite de production de vide (16), qu'un second clapet (21) est placé dans une conduite de retour (22) qui relie-le puisard du filtre (13b) à la conduite de production du vide (16), qu'un premier dispositif de fermeture (25) est placé dans la conduite du compresseur (27) et un second dispositif de fermeture (17) est placé dans la conduite de production du vide (16) au réservoir silo (10) et qu'une vanne d'aération (23) est placée à l'extrémité d'une conduite d'aération (24) de telle manière que le puisard du filtre (13b) peut être nettoyé lors de l'ouverture de la vanne (23), des impuretés ou équivalent pouvant être soufflées par la conduite de retour (22) et la conduite de production du vide (16) dans le réservoir silo.

2. installation d'aspiration et de refoulement (100) selon la revendication 1,
**caractérisée en ce**
**que** l'unité filtrante (13) est configurée comme un filtre de cyclone et le puisard du filtre (13b) comme un puisard de cyclone.

3. installation d'aspiration et de refoulement selon l'une des revendications 1 ou 2,
**caractérisée en ce**
**que** le premier clapet (20) et/ou le second clapet (21) est un clapet antiretour.

4. Installation d'aspiration et de refoulement selon la revendication 1 ou 3,
**caractérisée en ce**
**que** le premier dispositif de fermeture (25) et/ou le second dispositif de fermeture (17) est configuré comme un clapet pivotant ou de fermeture dans la conduite associée.

5. Installation d'aspiration et de refoulement selon l'une des revendications 1 à 4,
**caractérisée en ce**
**que** la vanne d'aération (23) est configurée comme un robinet à boisseau sphérique.

6. installation d'aspiration et de refoulement selon l'une des revendications 1 à 5,
**caractérisée en ce**
**que** les clapets (21 ; 22), les dispositifs de fermeture (17 ; 25) et/ou la vanne d'aération (23) sont pourvus de dispositifs d'actionnement électriques, pneumatiques ou hydrauliques si bien que ceux-ci peuvent être réglés et manoeuvrés en étant commandés à distance, en particulier par ordinateur.

7. Installation d'aspiration et de refoulement selon l'une des revendications 1 à 6,
**caractérisée en ce**
**qu'**une conduite d'air comprimé (29) est raccordée au compresseur (12) et la conduite d'air comprimé (29) est raccordée à une batterie d'air (15), des marchandises à charger qui se trouvent dans la cuve de purge (11) pouvant être ameublies en soufflant de l'air comprimé au moyen des conduites (30a ; 30b ; 30c ; 30d) qui débouchent dans une cuve de purge (11) qui est placée à l'extrémité postérieure ou sur la face inférieure du réservoir silo (10).

8. installation d'aspiration et de refoulement selon l'une des revendications 1 à 7,
**caractérisée en ce**
**que** le puisard du filtre (13b) présente la conduite d'aération en forme de L (24) à l'extrémité de laquelle le robinet à boisseau sphérique (23) est placé et que le puisard du filtre (13b) est relié par la conduite de retour (22), que présente le clapet antiretour (21), à la conduite de production du vide (16) qui est raccordée au réservoir silo (10).

9. installation d'aspiration et de refoulement selon l'une des revendications 1 à 8,
**caractérisée en ce**
**que** le nettoyage du corps de filtre (13a) de l'unité filtrante (13) peut être effectué à contre-courant, la conduite du compresseur (27) pouvant être fermée par le clapet (25).
